# FASCICULE DE BREVET EUROPEEN

(11) **EP 3 340 098 B1**
(45) Date de publication et mention de la délivrance du brevet: **11.08.2021**
(21) Numéro de dépôt: 17208751.2
(22) Date de dépôt: 20.12.2017
(51) Int. Cl.: G06F 21/55, G06F 21/77, G06Q 20/34, G06Q 20/38, G06Q 20/40, G07F 7/10, G07F 7/08, G06F 7/58, H04L 9/08, H04L 9/32

(54) **PROCÉDÉ POUR LA SÉCURITÉ D'UNE OPÉRATION ÉLECTRONIQUE AVEC UNE CARTE À PUCE**
VERFAHREN ZUR SICHERUNG EINER ELEKTRONISCHEN OPERATION MIT EINER CHIPKARTE
METHOD FOR SECURING AN ELECTRONIC OPERATION WITH A SMART CARD

(30) Priorité: 23.12.2016 FR 1663307
(43) Date de publication de la demande: 27.06.2018
(73) Titulaire: IDEMIA France, 92700 Colombes (FR)
(72) Inventeur: TRUBERT, Rozenn, 92700 Colombes (FR); LOISEAU, Nicolas Loiseau, 92700 Colombes (FR)
(74) Mandataire: Gevers Patents

(56) Documents cités:
- WO-A1-2005/078986
- US-A1- 2005 149 734
- Michael Roland ET AL: "Cloning Credit Cards: A combined pre-play and downgrade attack on EMV Contactless", Proceeding WOOT'13, Proceedings of the 7th USENIX conference on Offensive Technologies, 13 août 2013 (2013-08-13), XP055209476, Extrait de l'Internet: URL:http://0b4af6cdc2f0c5998459-c0245c5c93 7c5dedcca3f1764ecc9b2f.r43.cf2.rackcdn.com /12055-woot13-roland.pdf [extrait le 2015-08-25]

## Description

### Domaine technique

Selon un premier aspect, la présente invention concerne un procédé pour aider à améliorer la sécurité d'une opération électronique avec une carte à puce. Selon un deuxième aspect, la présente invention concerne une carte à puce comprenant des premiers moyens d'exécution informatique pour mettre en œuvre certaines étapes du procédé. Selon un troisième aspect, l'invention propose un programme informatique comprenant des instructions pour l'exécution des étapes du procédé. Selon un quatrième aspect, l'invention propose un support d'enregistrement lisible par des moyens d'exécution informatique et sur lequel sont enregistrées des instructions pour l'exécution des étapes du procédé.

### Art antérieur

Il est connu d'utiliser un carte à puce pour effectuer une authentification auprès d'un lecteur afin de réaliser une opération électronique. Par exemple, une telle carte à puce peut être utilisée pour s'authentifier auprès d'un portique de sécurité pour qu'il s'ouvre automatiquement ou pour s'authentifier auprès d'un terminal de paiement pour qu'une transaction bancaire soit réalisée.

Il est important que l'authentification ne puisse être falsifiée. Un procédé connu pour diminuer le risque de falsification de l'authentification est le suivant. Le lecteur envoie un nonce cryptographique à la carte à puce. La carte à puce détermine, sur base du nonce cryptographique et d'une clé stockée dans sa mémoire, un cryptogramme de sécurisation et l'envoie au lecteur. Cette détermination peut nécessiter la saisie d'un code secret parfois appelé code PIN. Le lecteur envoie le cryptogramme de sécurisation et le nonce cryptographique à une entité de vérification, qui peut être l'entité qui a émis la carte à puce. L'entité de vérification vérifie le cryptogramme de sécurisation en se basant sur le nonce cryptographique. Si la vérification réussit, l'opération électronique peut avoir lieu. Si la vérification échoue, l'opération électronique ne peut pas avoir lieu.

La méthode suivante peut être employée pour falsifier l'authentification s'il est possible de faire des conjectures, ou prédictions, sur les nonces cryptographiques, autrement dit, s'ils ne sont pas suffisamment aléatoires. Cette méthode est parfois appelée "attaque par rejeu". Un lecteur fraudeur envoie un nonce cryptographique conjecturé à une carte à puce authentique. En réponse, la carte à puce authentique envoie un cryptogramme de sécurisation conjecturé correspondant au nonce cryptographique conjecturé. Ce dernier est stocké par le lecteur fraudeur.

Par la suite, il est possible de stocker ce cryptogramme de sécurisation conjecturé sur une carte à puce fraudeuse. Cette carte à puce fraudeuse peut être mise en communication avec un deuxième lecteur pour essayer de réaliser une authentification. Le deuxième lecteur envoie, comme lors d'une opération normale, un nonce cryptographique authentique à la carte à puce fraudeuse. Celui-ci, en réponse, lui renvoie le cryptogramme de sécurisation conjecturé. Le cryptogramme de sécurisation conjecturé et le nonce cryptographique authentique sont envoyés à l'entité de vérification par le deuxième lecteur. Si le nonce cryptographique authentique est égal au nonce cryptographique conjecturé, la vérification par l'entité de vérification est réussie car le cryptogramme de sécurisation conjecturé est bien celui attendu par l'entité de vérification comme correspondant au nonce cryptographique authentique. Par conséquent, l'opération peut avoir lieu bien qu'elle n'ait pas été autorisée par la carte à puce authentique.

Il est donc important de pouvoir vérifier si le nonce cryptographique est bien aléatoire.

Le document WO2016/097650 divulgue des exemples d'actions pour améliorer la sécurité d'opérations électroniques. Cependant, ces actions ne permettent pas de vérifier la similitude de nonces cryptographiques.

Le document US2005/149734 A1 décrit un procédé destiné à être utilisé par un terminal de télécommunication pour vérifier si un candidat RAND dans un challenge RAND EAP / SIM est probablement une répétition.

Le document "Michael Roland ET AL: "Cloning Crédit Cards: A combined pre-play and downgrade attack on EMV Contactless", Proceeding WOOT'13, Proceedings of the 7th USENIX conférence on Offensive Technologies" fait partie de l'état de la technique. Ce document décrit un scénario d'attaque sur des cartes de paiement sans contact qui permet à un attaquant de créer des clones fonctionnels d'une carte contenant les données de carte de crédit nécessaires ainsi que des codes d'autorisation pré-joués.

### Résumé de l'invention

L'invention est définie par les revendications indépendantes 1, 12, 13, 14 et 15 et a pour but d'améliorer la sécurité d'une opération électronique entre une carte à puce en vérifiant la similitude de nonces cryptographiques utilisés pour ladite opération électronique.

A cet effet, selon un premier aspect, l'invention propose un procédé pour aider à améliorer la sécurité d'une opération électronique avec une carte à puce, ladite carte à puce comprenant une mémoire stockant des nonces cryptographiques de référence, le procédé comprenant les étapes de:
(a) recevoir un dernier nonce cryptographique destiné à déterminer un cryptogramme de sécurisation pour ladite opération électronique,
(b) déterminer une dernière donnée de similitude sur base du résultat d'au moins une comparaison entre ledit dernier nonce cryptographique et un desdits nonces cryptographiques de référence stockés dans ladite mémoire,
(c) stocker ladite dernière donnée de similitude dans ladite mémoire,
(d) vérifier si ladite dernière donnée de similitude satisfait à une condition prédéfinie, et
(e) prendre une contremesure si ladite dernière donnée de similitude satisfait à ladite condition prédéfinie.

Lors du procédé selon l'invention, le nonce cryptographique de l'opération électronique en cours, appelé dernier nonce cryptographique, est comparé avec au moins un nonce cryptographique de référence. Leur similitude est quantifiée par la dernière donnée de similitude. La qualité de la dernière donnée de similitude est jugée en vérifiant si elle satisfait à une condition prédéfinie et une contremesure de sécurité est mise en œuvre si la qualité de la dernière donnée de similitude est mauvaise, autrement dit si le nonce cryptographique de l'opération électronique en cours est trop proche d'un nonce cryptographique de référence.

Il est donc possible d'agir, via la contremesure, sur l'opération électronique si le nonce cryptographique parait peu aléatoire.

Le procédé selon l'invention peut être utilisé pour améliorer la sécurité de toute opération électronique mettant en jeu une détermination d'un cryptogramme de sécurisation sur base d'un nonce cryptographique. Cela peut par exemple servir pour une opération électronique relative à l'ouverture d'un portique de sécurité ou à un paiement bancaire.

La carte à puce, appelée aussi carte à microcircuit comprend des premiers moyens d'exécution informatique. Elle est de préférence conforme à la norme ISO7816. Elle peut, par exemple, fonctionner selon le protocole EMV (Europay Mastercard Visa) qui est un protocole standard international de sécurité des cartes de paiement. Le protocole EMV permet de diminuer les risques de fraude en permettant notamment l'authentification de la carte à puce et de son porteur. La carte à puce est préférentiellement conçue pour communiquer avec un dispositif électronique externe dénommé terminal ou lecteur. La carte à puce est un dispositif électronique portable.

La mémoire de la carte à puce est de préférence une mémoire non-volatile, par exemple une mémoire EEPROM. La mémoire de la carte à puce est de préférence sécurisée. Un stockage dans la mémoire peut être à court terme ou à long terme.

Dans le cadre du présent document, un "cryptogramme de sécurisation" est une donnée résultant d'un chiffrement utilisant le nonce cryptographique et potentiellement d'autres données, par exemple une clé stockée dans la mémoire de la carte à puce. Le cryptogramme de sécurisation peut aussi être appelé information encryptée, clé cryptée ou information chiffrée.

Dans le cadre du présent document, un "nonce cryptographique" est une donnée censément aléatoire utilisée pour générer le cryptogramme de sécurisation. Le nonce cryptographique peut aussi être appelé aléa, nombre cryptographique ou graine cryptographique.

Dans le cadre du présent document, une "opération électronique", qui peut être aussi appelée "transaction électronique" comprend une pluralité d'étapes mises en oeuvre par un ou plusieurs dispositifs) électronique(s), dont une étape d'authentification utilisant un nonce cryptographique et un cryptogramme de sécurisation.

De préférence, les étapes (a) à (e) se suivent chronologiquement. En particulier, les étapes (a) à (e) se suivent préférentiellement dans un laps de temps assez court, de maximum quelques minutes.

Préférentiellement, les étapes (a) à (c) sont réalisées par la carte à puce. Plus préférentiellement, les étapes (a) à (e) sont réalisées par la carte à puce.

De préférence, le procédé selon l'invention comprend en outre un stockage d'une information caractéristique de l'opération électronique qui permet d'identifier ladite opération électronique. Cela peut être, par exemple, un ATC (Application Transaction Counter = compteur de transaction de l'application) de ladite opération électronique.

Selon un mode de réalisation de l'invention, le procédé comprend en outre un stockage dudit dernier nonce cryptographique dans ladite mémoire. Cela permet que le dernier nonce cryptographique devienne un nonce cryptographique de référence pour des opérations électroniques subséquentes.

Selon un mode de réalisation de l'invention, au moins un des nonces cryptographiques de référence est un nonce cryptographique reçu lors d'une opération électronique antérieure à ladite opération électronique. Le procédé selon l'invention compare alors des nonces cryptographiques de plusieurs opérations électroniques. Si ceux-ci sont similaires, c'est une indication d'un manque de caractère aléatoire des nonces cryptographiques.

Selon un mode de réalisation de l'invention, au moins un des nonces cryptographiques de référence est fixe. Par exemple, un des nonces cryptographiques de référence peut être 00 00 00 00 et/ou FF FF FF FF. Cela permet de réaliser le procédé selon l'invention même si la carte à puce n'a en mémoire aucun nonce cryptographique reçu lors d'une opération électronique antérieure.

Selon un mode de réalisation de l'invention, le procédé comprend en outre un envoi d'information vers une entité de vérification. L'entité de vérification a typiquement plus de capacité de calcul et de flexibilité de programmation que la carte à puce. L'envoi d'information vers l'entité de vérification se fait de préférence via un lecteur connecté à la carte à puce. Par exemple, une partie ou la totalité de l'étape (d) peut être réalisée par l'entité de vérification. Il est alors nécessaire d'envoyer la dernière donnée de similitude ou une information issue de celle-ci à l'entité de vérification. Il est aussi possible que ce soit l'entité de vérification et/ou la carte à puce qui réalise l'étape (e). Il est par exemple possible que la contremesure de l'étape (e) comprenne que l'entité de vérification force l'opération électronique à avoir lieu en ligne.

Selon un mode de réalisation de l'invention, la carte à puce réalise la totalité de l'étape (d).

Selon un mode de réalisation de l'invention, la carte à puce réalise la totalité de l'étape (e).

Selon un mode de réalisation de l'invention, la contremesure de l'étape (e) comprend que la carte à puce force l'opération électronique à avoir lieu en ligne.

Selon un mode de réalisation de l'invention, l'étape (b) comprend de:
- comparer ledit dernier nonce cryptographique avec un premier nonce cryptographique de référence de façon à obtenir une première donnée de similitude intermédiaire,
- comparer ledit dernier nonce cryptographique avec un deuxième nonce cryptographique de référence de façon à obtenir une deuxième donnée de similitude intermédiaire, et
- comparer lesdites première et deuxième données de similitude intermédiaires de façon à choisir parmi elles la dernière donnée de similitude.

Cela permet de quantifier la similitude entre le dernier nonce cryptographique et une pluralité de nonces cryptographiques de référence par des données de similitude intermédiaires et puis de choisir la donnée de similitude intermédiaire qui correspond à la plus grande similitude avec le dernier nonce cryptographique.

Selon un mode de réalisation de l'invention, le dernier nonce cryptographique comprend des premiers éléments situés à des positions dans le dernier nonce cryptographique, le nonce cryptographique de référence comprend des deuxièmes éléments situés à des positions dans le nonce cryptographique de référence, chaque position dans le dernier nonce cryptographique ayant une position équivalente dans le nonce cryptographique de référence et la comparaison comprend de comparer chaque premier élément au deuxième élément situé dans la position équivalente, un élément pouvant être par exemple un octet, un quartet ou un bit. Par exemple, le premier octet du dernier nonce cryptographique peut être comparé au premier octet du nonce cryptographique de référence, le deuxième octet du dernier nonce cryptographique peut être comparé au deuxième octet du nonce cryptographique de référence et ainsi de suite pour tous les octets.

Selon un mode de réalisation de l'invention, l'étape (d) comprend de comparer la dernière donnée de similitude et une donnée de similitude globale précédente stockée dans ladite mémoire lors d'une réalisation précédente dudit procédé afin de déterminer une dernière donnée de similitude globale. Cette sous-étape de l'étape de vérification (d) permet de déterminer une donnée de similitude, appelée donnée de similitude globale, qui correspond à la similitude la plus grande parmi plusieurs opérations électroniques ayant eu lieu. Elle est de préférence réalisée par la carte à puce lors de chaque opération électronique. La donnée de similitude globale permet de résumer en une seule donnée le caractère aléatoire d'une pluralité de nonces cryptographiques reçus par la carte à puce. Si l'entité de vérification désire vérifier le caractère aléatoire de cette pluralité de nonces cryptographiques reçus par la carte à puce, il lui suffit de demander la donnée de similitude globale à la carte à puce.

Selon un mode de réalisation de l'invention, ladite contremesure empêche la suite de ladite opération électronique. Ainsi, si le caractère aléatoire du nonce cryptographique est douteux, l'opération électronique ne peut être achevée. Par exemple, si l'opération électronique concerne un paiement, celui-ci ne peut avoir lieu. Ou, si l'opération électronique concerne l'ouverture d'un portique, celui-ci reste fermé.

Selon un mode de réalisation de l'invention, ladite opération électronique est conforme au protocole EMV. Ce protocole est utilisé pour une opération de paiement par la carte à puce.

Selon un mode de réalisation de l'invention, ledit dernier nonce cryptographique est agencé pour permettre à la carte à puce, sur base d'une clé stockée dans ladite mémoire, de déterminer un cryptogramme de sécurisation.

Selon un mode de réalisation de l'invention, le procédé comprend, si ladite dernière donnée de similitude ne satisfait pas à ladite condition prédéfinie, de déterminer un cryptogramme de sécurisation sur base dudit dernier nonce cryptographique et de ladite clé et d'envoyer ledit cryptogramme de sécurisation à une entité de vérification. Si ladite dernière donnée de similitude ne satisfait pas à ladite condition prédéfinie, il est considéré que le nonce cryptographique est suffisamment aléatoire. L'opération électronique peut donc se poursuivre normalement, sans contremesure, ce qui inclut le calcul du cryptogramme de sécurisation par la carte à puce et son éventuel envoi, via le lecteur, à l'entité de vérification. Cet envoi peut être différé, par exemple lors d'une opération électronique hors ligne.

Selon un deuxième aspect, l'invention propose une carte à puce comprenant des premiers moyens d'exécution informatique pour mettre en œuvre les étapes (a) à (c) du procédé selon l'invention, de préférence pour mettre en œuvre les étapes (a) à (e) du procédé selon l'une quelconque des revendications précédentes. Il est particulièrement avantageux que la carte à puce réalise les étapes (a) à (e) car celles-ci peuvent avoir lieu même lorsqu'il n'y a pas de connexion entre la carte à puce et l'entité de vérification.

L'invention propose en outre un système informatique comprenant la carte à puce et des deuxièmes moyens d'exécution informatique pour mettre en œuvre les étapes (d) et (e). Les deuxièmes moyens d'exécution informatique peuvent être compris dans la carte à puce ou extérieurs à la carte à puce ou être compris partiellement dans la carte à puce et partiellement à l'extérieur de la carte à puce. Par exemple, les deuxièmes moyens d'exécution informatique peuvent être compris, au moins partiellement, dans une entité de vérification comprise dans le système informatique.

Selon un troisième aspect, l'invention propose un programme informatique comprenant des instructions pour l'exécution des étapes du procédé selon l'invention lorsque ledit programme informatique est exécuté par des moyens d'exécution informatique. Ces moyens d'exécution informatique sont au moins partiellement compris dans la carte à puce.

Selon un quatrième aspect, l'invention propose un support d'enregistrement lisible par des moyens d'exécution informatique et sur lequel sont enregistrées des instructions pour l'exécution des étapes du procédé selon l'invention. Le support d'enregistrement peut comprendre une pluralité de mémoires. De préférence, au moins une mémoire de ladite pluralité est comprise sur la carte à puce et au moins une mémoire de ladite pluralité est comprise dans l'entité de vérification.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre un système informatique pour la mise en œuvre de l'invention,
- la figure 2 illustre un procédé selon un mode de réalisation de l'invention,
- la figure 3 illustre un exemple de base de données selon un mode de réalisation de l'invention,
- la figure 4 illustre un exemple de détermination de la dernière donnée de similitude selon un mode de réalisation de l'invention,
- les figures 5a, 5b et 5c illustrent différentes façons de réaliser une comparaison entre un dernier nonce cryptographique et un nonce cryptographique de référence, et
- la figure 6 illustre une première partie des étapes d'une vérification d'une condition prédéfinie selon un mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier », « deuxième » ou « dernier » servent uniquement à différencier les différents éléments et n'impliquent pas d'ordre entre ces éléments.

Sur les figures, les éléments identiques ou analogues peuvent porter les mêmes références.

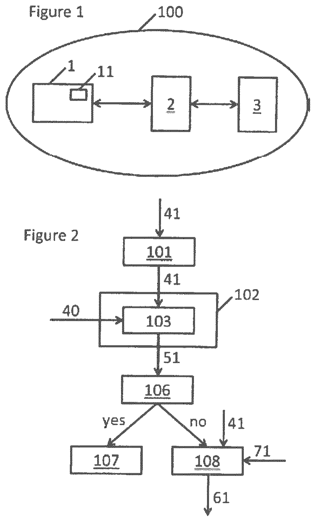

La figure 1 illustre un système informatique 100 pour la mise en œuvre de l'invention. Le système informatique comprend une carte à puce 1 en communication électronique avec un lecteur 2, lui-même en communication électronique avec une entité de vérification 3. La carte à puce 1 comprend une mémoire 11.

Lorsque la carte à puce 1 est connectée au lecteur 2 pour réaliser une opération électronique, cette dernière peut avoir lieu en ligne ou hors ligne. Si elle a lieu en ligne, cela signifie que le lecteur 2 est en communication avec l'entité de vérification 3 lorsque la carte à puce 1 est en communication avec le lecteur 2. Ainsi, un cryptogramme de sécurisation et un nonce cryptographique peuvent être envoyés directement à l'entité de vérification 3. L'entité de vérification 3 peut directement vérifier le cryptogramme de sécurisation en se basant sur le nonce cryptographique et si la vérification est réussie, l'entité de vérification 3 peut autoriser l'opération électronique. Si l'opération électronique a lieu hors ligne, le lecteur 2 applique lui-même des critères de vérification déterminés pour décider si l'opération électronique en cours est autorisée. Une opération électronique en ligne est donc plus sécurisée qu'une opération électronique hors ligne.

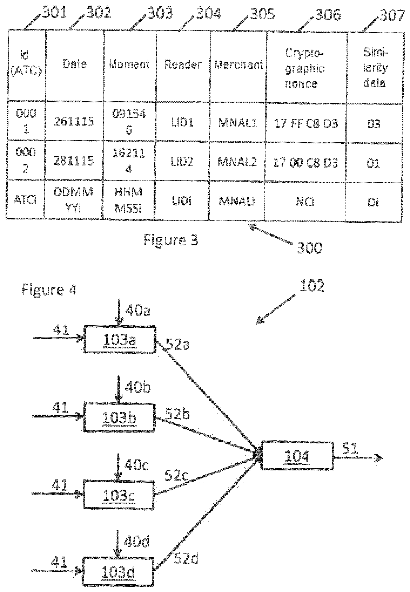

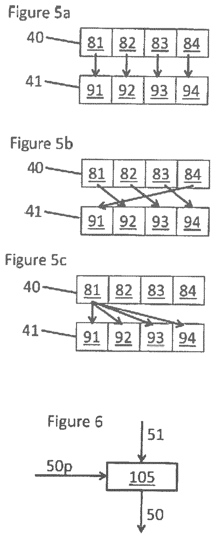

La figure 2 illustre un procédé selon un mode de réalisation de l'invention. Le procédé permet d'améliorer la sécurité d'une opération électronique. Selon un mode de réalisation de l'invention, le procédé comprend l'envoi par le lecteur 2, à la carte à puce 1, d'un dernier nonce cryptographique 41. La carte à puce 1 reçoit 101 le dernier nonce cryptographique 41. De préférence, la carte à puce 1 stocke le dernier nonce cryptographique 41 dans sa mémoire 11. La carte à puce 1 utilise le dernier nonce cryptographique 41 et un nonce cryptographique 40 stocké dans sa mémoire 11 pour réaliser une comparaison 103 afin de déterminer 102 une dernière donnée de similitude 51. Un mode de réalisation de l'étape de détermination 102 est décrit plus en détails en référence à la figure 4. La dernière donnée de similitude 51 est de préférence stockée dans la mémoire 11. Le système informatique 100 vérifie 106 si la dernière donnée de similitude 51 satisfait à une condition prédéfinie. Des modes de réalisation de l'étape de vérification 106 sont décrits plus en détails plus loin, notamment en référence à la figure 6.

Si la dernière donnée de similitude 51 ne satisfait pas à la condition prédéfinie (non), l'opération électronique continue. Cela inclut notamment que la carte à puce 1 utilise le dernier nonce cryptographique 41 et une clé 71 stockée dans sa mémoire 11 pour déterminer un cryptogramme de sécurisation 61. La carte à puce 1 envoie ensuite le cryptogramme de sécurisation 61 au lecteur 2. Par la suite, le lecteur 2 envoie le cryptogramme de sécurisation 61 à l'entité de vérification 3.

Si la dernière donnée de similitude 51 satisfait à la condition prédéfinie (oui), le système informatique 100 prend 107 une contremesure. La contremesure peut être, par exemple, que l'opération électronique doit être effectuée en ligne. La contremesure peut être, par exemple, que l'opération électronique est refusée, ce qui empêche les étapes suivantes de l'opération électronique. La contremesure peut être, par exemple, que l'application actuellement exécutée et relative à l'opération électronique est bloquée. Dans ce cas, seule une commande spécifique peut débloquer l'application. La contremesure peut être, par exemple, que toute opération électronique sans contact entre le lecteur 2 et la carte à puce 1 devient interdite, seules les opérations électroniques avec contact restent autorisées. La contremesure peut être, par exemple, de bloquer la carte à puce 1 de façon réversible ou irréversible. La contremesure peut être, par exemple, d'effacer la mémoire 11 de la carte à puce 1. Si la vérification 106 est au moins partiellement réalisée par l'entité de vérification 3, la contremesure 107 comprend, de préférence, l'envoi d'une information de l'entité de vérification 3 à la carte à puce 1.

De préférence, la contremesure 107 est paramétrable en phase de personnalisation.

Dans un mode de réalisation de l'invention, la vérification 106 est réalisée par la carte à puce 1. De préférence, dans un tel cas, la contremesure 107 est paramétrable en phase de personnalisation.

Dans un mode de réalisation de l'invention, la vérification et la contremesure 107 sont mises en œuvre par la carte à puce 1. De préférence, dans un tel cas, la contremesure 107 est paramétrable en phase de personnalisation.

Dans un mode de réalisation de l'invention, la condition prédéfinie est que dernière donnée de similitude 51 est en-dessous d'un certain seuil ou est au-dessus d'un certain seuil.

Dans un mode de réalisation de l'invention, la condition prédéfinie est qu'une donnée résultante déterminée à partir de la dernière donnée de similitude 51 est en-dessous d'un certain seuil ou est au-dessus d'un certain seuil.

La figure 3 illustre un exemple de base de données 300 stockée dans la mémoire 11 de la carte à puce 1. De préférence, lors du procédé selon l'invention, la carte à puce 1 stocke les informations suivantes dans la base de donnée 300: un identifiant de l'opération électronique, colonne 301, la date de l'opération électronique, colonne 302, le moment de l'opération électronique, colonne 303, un identifiant du lecteur 2 sur lequel l'opération électronique est réalisée, colonne 304, un identifiant du marchand correspondant au lecteur 2, colonne 305, le dernier nonce cryptographique 41, colonne 306, et la dernière donnée de similitude 51, colonne 307. De préférence, une ligne ou une colonne de la base de données 300 correspond à une opération électronique. Dans un mode de réalisation de l'invention, la base de donnée 300 comprend un nombre fixe de lignes, chaque ligne correspondant à une opération électronique, et lorsque toutes les lignes sont remplies, la plus ancienne ligne est écrasée par le stockage d'informations pour une nouvelle opération électronique. L'identifiant de l'opération électronique, colonne 301, est de préférence un numéro ATC. S'il n'y a pas de fraude avec la carte à puce 1, les numéros ATC des différentes opérations électroniques sont censés être consécutifs.

Dans un mode de réalisation de l'invention, la base de données 300 comprend huit lignes de façon à stocker des informations relatives à huit opérations électroniques. Il est possible de définir un critère pour la dernière donnée de similitude 51 de façon à ce que seules les opérations électroniques dont la dernière donnée de similitude 51 correspond à ce critère, c'est-à-dire les opérations électroniques les plus douteuses, aient des informations stockées dans la base de données 300. Dans le cadre du protocole EMV, le nombre de lignes de la base de données 300 et éventuellement le critère peuvent être paramétrés en phase de personnalisation via une commande EMV et un DGI propriétaire.

La figure 4 illustre un exemple de détermination 102 de la dernière donnée de similitude 51. Dans cet exemple, la détermination 102 de la dernière donnée de similitude 51 comprend quatre comparaisons 103a, 103b, 103c, 103d entre le dernier nonce cryptographique 41 et un des nonces cryptographiques de référence 40a, 40b, 40c, 40d. Une nombre quelconque de comparaisons 103 pourraient être réalisé tout en restant dans le cadre de l'invention.

Lors d'une première comparaison 103a, le dernier nonce cryptographique 41 est comparé à un premier nonce cryptographique de référence 40a. Il en résulte une première donnée de similitude intermédiaire 52a. Lors d'une deuxième comparaison 103b, le dernier nonce cryptographique 41 est comparé à un deuxième nonce cryptographique de référence 40b. Il en résulte une deuxième donnée de similitude intermédiaire 52b. Lors d'une troisième comparaison 103c, le dernier nonce cryptographique 41 est comparé à un troisième nonce cryptographique de référence 40c. Il en résulte une troisième donnée de similitude intermédiaire 52c. Lors d'une quatrième comparaison 103d, le dernier nonce cryptographique 41 est comparé à un quatrième nonce cryptographique de référence 40d. Il en résulte une quatrième donnée de similitude intermédiaire 52d.

Les données de similitude intermédiaires 52a, 52b, 52c, 52d sont alors comparées 104 et celle qui correspond à la plus grande similitude entre n'importe lequel des nonces cryptographiques de référence 40a, 40b, 40c, 40d et le dernier nonce cryptographique 41 est choisie pour être la dernière donnée de similitude 51.

Dans un mode de réalisation de l'invention, le premier nonce cryptographique de référence 40a est une donnée fixe, par exemple un nombre fixe. Il peut valoir 00 00 00 00 par exemple.

Dans un mode de réalisation de l'invention, le deuxième nonce cryptographique de référence 40b est une donnée fixe, par exemple un nombre fixe. Il peut valoir FF FF FF FF par exemple.

Dans un mode de réalisation de l'invention, le troisième nonce cryptographique de référence 40c est un nonce cryptographique reçu lors d'une opération électronique antérieure. Pour reprendre l'exemple illustré à la figure 3, il peut être égal à 17 FF C8 D3.

Dans un mode de réalisation de l'invention, le quatrième nonce cryptographique de référence 40d est un nonce cryptographique reçu lors d'une autre opération électronique antérieure. Pour reprendre l'exemple illustré à la figure 3, il peut être égal à 17 00 C8 D3.

Les figures 5a à 5c illustrent différentes façons de réaliser la comparaison 103. Dans ces illustrations, le dernier nonce cryptographique 41 comprend des premiers octets situés à des positions 91, 92, 93, 94 et le nonce cryptographique de référence 40 comprend des deuxièmes octets situés à des positions 81, 82, 83, 84. Il est clair pour l'homme du métier que la position 91 du dernier nonce cryptographique 41 est équivalente à la position 81 du nonce cryptographique de référence 40, la position 92 du dernier nonce cryptographique 41 est équivalente à la position 82 du nonce cryptographique de référence 40, la position 93 du dernier nonce cryptographique 41 est équivalente à la position 83 du nonce cryptographique de référence 40 et la position 94 du dernier nonce cryptographique 41 est équivalente à la position 84 du nonce cryptographique de référence 40.

Il est possible, tout en restant dans le cadre de l'invention, de réaliser la comparaison 103 de façon similaire si les éléments des nonces cryptographiques 40, 41 sont des quartets, des bits etc et quel que soit le nombre de ces éléments.

La figure 5a illustre une première façon de réaliser la comparaison 103. La donnée de similitude 51 (ou donnée de similitude intermédiaire 52 si plusieurs comparaisons 103 sont réalisées comme illustré à la figure 4) pour cette comparaison 103 est initialement égale à zéro. L'octet situé à la position 81 du nonce cryptographique de référence 40 est comparé à l'octet situé à la position 91 du dernier nonce cryptographique 41. Si ces octets sont différents, on ajoute un à la donnée de similitude 51. S'ils sont égaux, on n'ajoute rien à la donnée de similitude 51.

L'octet situé à la position 82 du nonce cryptographique de référence 40 est comparé à l'octet situé à la position 92 du dernier nonce cryptographique 41. Si ces octets sont différents, on ajoute un à la donnée de similitude 51. S'ils sont égaux, on n'ajoute rien à la donnée de similitude 51.

L'octet situé à la position 83 du nonce cryptographique de référence 40 est comparé à l'octet situé à la position 93 du dernier nonce cryptographique 41. Si ces octets sont différents, on ajoute un à la donnée de similitude 51. S'ils sont égaux, on n'ajoute rien à la donnée de similitude 51.

L'octet situé à la position 84 du nonce cryptographique de référence 40 est comparé à l'octet situé à la position 94 du dernier nonce cryptographique 41. Si ces octets sont différents, on ajoute un à la donnée de similitude 51. S'ils sont égaux, on n'ajoute rien à la donnée de similitude 51.

En résumé, si les quatre octets sont différents, la donnée de similitude 51 (ou donnée de similitude intermédiaire 52) pour cette comparaison 103 est égale à quatre; et si les quatre octets sont égaux, la donnée de similitude 51 (ou donnée de similitude intermédiaire 52) pour cette comparaison 103 est égale à zéro. Par exemple, si le dernier nonce cryptographique 41 est 17 00 C8 D3 et le nonce cryptographique de référence 40 est 17 FF C8 D3, la donnée de similitude 51 (ou donnée de similitude intermédiaire 52) est égale à un.

La figure 5b illustre une deuxième façon de réaliser la comparaison 103. Elle est similaire à la première façon décrite en référence à la figure 5a, excepté que chaque octet est comparé à l'octet décalé d'une position dans l'autre nonce cryptographique. La donnée de similitude 51(ou donnée de similitude intermédiaire 52) résultant sera égale à zéro, un, deux, trois ou quatre.

La figure 5c illustre une troisième façon de réaliser la comparaison 103. La donnée de similitude 51 (ou donnée de similitude intermédiaire 52) pour cette comparaison 103 est initialisée à zéro. Chaque octet du nonce cryptographique de référence 40 est comparé à chacun des octets du dernier nonce cryptographique 41. S'ils sont différents, la donnée de similitude 51 (ou donnée de similitude intermédiaire 52) pour cette comparaison 103 est incrémentée de un. La donnée de similitude 51 (ou donnée de similitude intermédiaire 52) résultant sera un entier entre zéro et seize.

De manière générale, quelle que soit la façon dont la comparaison 103 est réalisée, la donnée de similitude 51 est de préférence déterminée à partir du nombre d'éléments différents entre le dernier nonce cryptographique 41 et le nonce cryptographique de référence 40 auquel il est comparé.

Dans un mode de réalisation de l'invention, la vérification 106 comprend une première partie réalisée par la carte à puce 1 et illustrée à la figure 6 et une deuxième partie réalisée par la carte à puce 1 ou par l'entité de vérification 3.

Lors de cette première partie de la vérification 106, une donnée de similitude globale 50 est déterminée de la façon suivante. La donnée de similitude globale 50 est de préférence la plus mauvaise donnée de similitude obtenue lors de l'ensemble des déterminations 102. La dernière donnée de similitude 51 est comparée 105 avec une donnée de similitude globale 50p d'une opération électronique précédente qui était stockée dans la mémoire 11. Cette donnée de similitude globale 50p d'une opération électronique précédente peut être appelée donnée de similitude globale précédente. La donnée de similitude globale 50 est choisie entre la dernière donnée de similitude 51 et la donnée de similitude globale précédente 50p sur base d'un critère global déterminé. Cette donnée de similitude globale 50 choisie peut être appelée "dernière donnée de similitude globale". De préférence, celle qui est choisie est celle qui correspond au plus grand degré de similitude. Par exemple, la plus petite de la dernière donnée de similitude 51 et la donnée de similitude globale précédente 50p est choisie. De préférence, les informations de la base de données 300 relatives à l'opération électronique qui correspond à la donnée de similitude globale 50 choisie sont stockées afin de pouvoir être facilement lues. Ainsi, suivant cet exemple, la vérification 106 peut comprendre de déterminer si le min(la donnée de similitude globale précédente 50p; la dernière donnée de similitude 51) < seuil, ce qui est une façon de vérifier si la dernière donnée de similitude satisfait à la condition prédéfinie.

Dans un premier mode de réalisation de l'invention, la vérification 106 est réalisée par la carte à puce 1 et la prise de la contremesure 107 est réalisée par la carte à puce 1. De préférence, il est en outre possible, que l'entité de vérification 3 demande des dernières données de similitude 51 à la carte à puce 1, par exemple par une commande read record ou demande la dernière donnée de similitude globale 50 à la carte à puce 1, par exemple par une commande get data. Par exemple, l'entité de vérification 3 peut faire cette demande si les numéros ATC qu'elle a reçu ne sont pas consécutifs. L'entité de vérification 3 peut alors traiter la ou les donnée(s) de similitude reçue(s) et éventuellement décider de prendre une deuxième contremesure.

Dans un deuxième mode de réalisation de l'invention, la vérification 106 comprend les étapes suivantes. L'entité de vérification 3 demande des dernières données de similitude 51 à la carte à puce 1, par exemple par une commande read record ou, si les étapes illustrées à la figure 6 ont été réalisées, demande la dernière donnée de similitude globale 50 à la carte à puce 1, par exemple par une commande get data. Par exemple, l'entité de vérification 3 peut faire cette demande si les numéros ATC qu'elle a reçu ne sont pas consécutifs. La carte à puce 1 envoie la ou les donnée(s) demandée(s) à l'entité de vérification 3. L'entité de vérification 3 procède à une vérification sur la ou les donnée(s) reçue(s). Si oui la condition prédéfinie est satisfaite, par exemple, si la dernière donnée de similitude 51 est égale à un alors que la comparaison illustrée à la figure 5a a été employée, l'entité de vérification 3 prend la contremesure 107.

De manière générale, si la carte à puce 1 reçoit une commande "get data" de l'entité de vérification 3, au moins une partie des informations contenues dans la base de données 300 peut être envoyée à l'entité de vérification 3 afin que le lecteur fraudeur et/ou le marchand fraudeur puisse être déterminé.

En d'autres termes, l'invention se rapporte à procédé pour aider à améliorer la sécurité d'une opération électronique réalisée via une carte à puce 1. Le procédé comprend de comparer 103 un nonce cryptographique 41 reçu en dernier par la carte à puce 1 avec au moins un nonce cryptographique de référence 40 stocké sur la carte à puce 1, afin de quantifier leur degré de similitude par une dernière donnée de similitude 51. Si la dernière donnée de similitude 51 ou un donnée de similitude globale 50 issue de la dernière donnée de similitude 51 satisfait à une condition prédéfinie, une contremesure 107 est prise afin d'augmenter la sécurité de l'opération électronique.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Procédé pour aider à améliorer la sécurité d'une opération électronique avec une carte à puce (1), ladite carte à puce (1) comprenant une mémoire (11) stockant des nonces cryptographiques de référence (40), le procédé comprenant les étapes de:
(a) recevoir (101) un dernier nonce cryptographique (41) destiné à déterminer (108) un cryptogramme de sécurisation (61) pour ladite opération électronique (31),
(b) déterminer (102) une dernière donnée de similitude (51) sur base du résultat d'au moins une comparaison (103) entre ledit dernier nonce cryptographique (41) et un desdits nonces cryptographiques de référence (40) stockés dans ladite mémoire (11),
(c) stocker ladite dernière donnée de similitude (51) dans ladite mémoire (11),
(d) vérifier (106) si ladite dernière donnée de similitude (51) satisfait à une condition prédéfinie, et
(e) prendre (107) une contremesure si ladite dernière donnée de similitude (51) satisfait à ladite condition prédéfinie,
dans lequel l'étape (d) comprend de comparer (105) la dernière donnée de similitude (51) et une donnée de similitude globale précédente (50p) stockée dans ladite mémoire (11) lors d'une réalisation précédente dudit procédé afin de déterminer une dernière donnée de similitude globale (50), la dernière donnée de similitude globale (50) étant choisie entre la dernière donnée de similitude (51) et la donnée de similitude globale précédente (50p) sur base d'un critère global déterminé tel que celle qui est choisie est celle qui correspond au plus grand degré de similitude.

2. Procédé selon la revendication 1, comprenant en outre un stockage dudit dernier nonce cryptographique (41) dans ladite mémoire (11).

3. Procédé selon la revendication précédente, **caractérisé en ce qu'**au moins un des nonces cryptographiques de référence (40) est un nonce cryptographique reçu lors d'une opération électronique antérieure à ladite opération électronique (31).

4. Procédé selon l'une quelconque des revendications précédentes, **caractérisé en ce qu'**au moins un des nonces cryptographiques de référence est fixe.

5. Procédé selon l'une quelconque des revendications précédentes, comprenant en outre un envoi d'information vers une entité de vérification (3).

6. Procédé selon l'une quelconque des revendications précédentes, **caractérisé en ce que** l'étape (b) comprend de:
• comparer (103a) ledit dernier nonce cryptographique (41) avec un premier nonce cryptographique de référence (40a) de façon à obtenir une première donnée de similitude intermédiaire (52a),
• comparer (103b) ledit dernier nonce cryptographique (41) avec un deuxième nonce cryptographique de référence (40b) de façon à obtenir une deuxième donnée de similitude intermédiaire (52b), et
• comparer (104) lesdites première (52a) et deuxième (52b) données de similitude intermédiaires de façon à choisir parmi elles la dernière donnée de similitude (51).

7. Procédé selon l'une quelconque des revendications précédentes, **caractérisé en ce que** le dernier nonce cryptographique (41) comprend des premiers éléments situés à des positions dans le dernier nonce cryptographique (41), le nonce cryptographique de référence (40) comprend des deuxièmes éléments situés à des positions dans le nonce cryptographique de référence (40), chaque position dans le dernier nonce cryptographique (41) ayant une position équivalente dans le nonce cryptographique de référence (40) et la comparaison (103) comprend de comparer chaque premier élément au deuxième élément situé dans la position équivalente, un élément pouvant être par exemple un octet, un quartet ou un bit.

8. Procédé selon l'une quelconque des revendications précédentes, **caractérisé en ce que** la contremesure de l'étape (e) comprend que la carte à puce force l'opération électronique à avoir lieu en ligne ; ou **en ce que** la contremesure de l'étape (e) est que l'application actuellement exécutée et relative à l'opération électronique est bloquée, de sorte que seule une commande spécifique peut débloquer l'application ; ou **en ce que** la contremesure de l'étape (e) est que toute opération électronique sans contact entre un lecteur (2) et la carte à puce (1) devient interdite, seules les opérations électroniques avec contact restent autorisées ; ou **en ce que** la contremesure de l'étape (e) est de bloquer la carte à puce (1) de façon réversible ou irréversible ; ou **en ce que** la contremesure de l'étape (e) est d'effacer la mémoire (11) de la carte à puce (1).

9. Procédé selon l'une quelconque des revendications 1 à 7, **caractérisé en ce que** ladite contremesure empêche la suite de ladite opération électronique.

10. Procédé selon l'une quelconque des revendications précédentes, **caractérisé en ce que** ladite opération électronique est conforme au protocole EMV.

11. Procédé selon l'une quelconque des revendications précédentes, comprenant, si ladite dernière donnée de similitude (51) ne satisfait pas à ladite condition prédéfinie, de déterminer un cryptogramme de sécurisation (61) sur base dudit dernier nonce cryptographique (41) et de ladite clé (71) et d'envoyer ledit cryptogramme de sécurisation (61) à une entité de vérification (3).

12. Carte à puce (1) comprenant des premiers moyens d'exécution informatique pour mettre en œuvre les étapes (a) à (e) du procédé selon l'une quelconque des revendications précédentes.

13. Système informatique (100) comprenant une carte à puce (1) comprenant des premiers moyens d'exécution informatique pour mettre en œuvre les étapes (a) à (c) du procédé selon l'une quelconque des revendications 1 à 11 et des deuxièmes moyens d'exécution informatique pour mettre en œuvre les étapes (d) et (e).

14. Programme informatique comprenant des instructions pour l'exécution des étapes du procédé selon l'une quelconque des revendications 1 à 11 lorsque ledit programme informatique est exécuté par des moyens d'exécution informatique.

15. Support d'enregistrement lisible par des moyens d'exécution informatique et sur lequel sont enregistrées des instructions pour l'exécution des étapes du procédé selon l'une quelconque des revendications 1 à 11.

## Patentansprüche

1. Verfahren zur Unterstützung der Verbesserung der Sicherheit einer elektronischen Operation mit einer Chipkarte (1), wobei die Chipkarte (1) einen Speicher (11) umfasst, der kryptographische Referenz-Nonces (40) speichert, wobei das Verfahren die folgenden Schritte umfasst:
(a) Empfangen (101) eines endgültigen kryptographischen Nonce (41) zur Bestimmung (108) eines Sicherheits-Kryptogramms (61) für die elektronische Operation (31),
(b) Bestimmen (102) einer letzten Ähnlichkeitsangabe (51) auf Basis des Ergebnisses von mindestens einem Vergleich (103) zwischen dem letzten kryptographischen Nonce (41) und einem der in dem Speicher (11) gespeicherten kryptographischen Referenz-Nonces (40),
(c) Speichern der letzten Ähnlichkeitsangabe (51) in dem Speicher (11),
(d) Prüfen (106), ob die letzte Ähnlichkeitsangabe (51) eine vordefinierte Bedingung erfüllt, und
(e) Ergreifen (107) einer Gegenmaßnahme, wenn die letzte Ähnlichkeitsangabe (51) die vordefinierte Bedingung erfüllt,
wobei der Schritt (d) das Vergleichen (105) der letzten Ähnlichkeitsangabe (51) und einer vorherigen globalen Ähnlichkeitsangabe (50p), die in dem Speicher (11) bei einer vorherigen Ausführung des Verfahrens gespeichert ist, umfasst, um eine letzte globale Ähnlichkeitsangabe (50) zu bestimmen, wobei die letzte globale Ähnlichkeitsangabe (50) zwischen der letzten Ähnlichkeitsangabe (51) und der vorherigen globalen Ähnlichkeitsangabe (50p) auf Basis eines bestimmten globalen Kriteriums derart ausgewählt wird, dass die ausgewählte diejenige ist, die dem größten Ähnlichkeitsgrad entspricht.

2. Verfahren nach Anspruch 1, weiter umfassend das Speichern des letzten kryptographischen Nonce (41) in dem Speicher (11).

3. Verfahren nach dem vorstehenden Anspruch, **dadurch gekennzeichnet, dass** mindestens einer der kryptographischen Referenz-Nonces (40) ein kryptographischer Nonce ist, der bei einer elektronischen Operation vor der elektronischen Operation (31) empfangen wurde.

4. Verfahren nach einem der vorstehenden Ansprüche, **dadurch gekennzeichnet, dass** mindestens einer der kryptographischen Referenz-Nonces fest ist.

5. Verfahren nach einem der vorstehenden Ansprüche, weiter umfassend das Senden von Informationen an eine Verifizierungsinstanz (3).

6. Verfahren nach einem der vorstehenden Ansprüche, **dadurch gekennzeichnet, dass** Schritt (b) umfasst:
• Vergleichen (103a) des letzten kryptographischen Nonce (41) mit einem ersten kryptographischen Referenz-Nonce (40a), um eine erste Zwischenähnlichkeitsangabe (52a) zu erhalten,
• Vergleichen (103b) des letzten kryptographischen Nonce (41) mit einem zweiten kryptographischen Referenz-Nonce (40b), um eine zweite Zwischenähnlichkeitsangabe (52b) zu erhalten,
• Vergleichen (104) der ersten (52a) und zweiten (52b) Zwischenähnlichkeitsangaben, um die letzte Ähnlichkeitsangabe (51) aus ihnen auszuwählen.

7. Verfahren nach einem der vorstehenden Ansprüche, **dadurch gekennzeichnet, dass** der letzte kryptographische Nonce (41) erste Elemente umfasst, die sich an Positionen im letzten kryptographischen Nonce (41) befinden, der kryptographische Referenz-Nonce (40) zweite Elemente umfasst, die sich an Positionen im kryptographischen Referenz-Nonce (40) befinden, wobei jede Position in dem letzten kryptographischen Nonce (41) eine äquivalente Position in dem kryptographischen Referenz-Nonce (40) aufweist, und der Vergleich (103) das Vergleichen jedes ersten Elements mit dem zweiten Element, das sich an der äquivalenten Position befindet, umfasst, wobei ein Element beispielsweise ein Oktett, ein Quartett oder ein Bit sein kann.

8. Verfahren nach einem der vorstehenden Ansprüche, **dadurch gekennzeichnet, dass** die Gegenmaßnahme des Schrittes (e) darin besteht, dass die Chipkarte die elektronische Operation online erzwingt; oder dass die Gegenmaßnahme des Schrittes (e) darin besteht, dass die gerade ausgeführte und mit der elektronischen Operation zusammenhängende Anwendung gesperrt wird, so dass nur ein bestimmter Befehl die Anwendung entsperren kann; oder dass die Gegenmaßnahme des Schrittes (e) darin besteht, dass jede berührungslose elektronische Operation zwischen einem Lesegerät (2) und der Chipkarte (1) verboten wird, wobei nur berührungslose elektronische Operationen erlaubt bleiben; oder dass die Gegenmaßnahme des Schrittes (e) darin besteht, die Chipkarte (1) reversibel oder irreversibel zu sperren; oder dass die Gegenmaßnahme des Schrittes (e) darin besteht, den Speicher (11) der Chipkarte (1) zu löschen.

9. Verfahren nach einem der Ansprüche 1 bis 7, **dadurch gekennzeichnet, dass** die Gegenmaßnahme die weitere Durchführung der elektronischen Operation verhindert.

10. Verfahren nach einem der vorstehenden Ansprüche, **dadurch gekennzeichnet, dass** die elektronische Operation dem EMV-Protokoll entspricht.

11. Verfahren nach einem der vorstehenden Ansprüche, umfassend, wenn die letzte Ähnlichkeitsangabe (51) die vordefinierte Bedingung nicht erfüllt, das Bestimmen eines Sicherheits-Kryptogramms (61) auf Basis des letzten kryptographischen Nonce (41) und des Schlüssels (71) und das Senden des Sicherheits-Kryptogramms (61) an eine Verifizierungsinstanz (3).

12. Chipkarte (1), umfassend erste Computerausführungsmittel zur Implementierung der Schritte (a) bis (e) des Verfahrens nach einem der vorstehenden Ansprüche.

13. Computersystem (100), umfassend eine Chipkarte (1), die erste Computerausführungsmittel zur Implementierung der Schritte (a) bis (c) des Verfahrens nach einem der Ansprüche 1 bis 11 und zweite Computerausführungsmittel zur Implementierung der Schritte (d) und (e) umfasst.

14. Computerprogramm, das Anweisungen zum Durchführen der Schritte des Verfahrens nach einem der Ansprüche 1 bis 11 umfasst, wenn das Computerprogramm durch Computerausführungsmittel ausgeführt wird.

15. Aufzeichnungsträger, der durch Computerausführungsmittel lesbar ist und auf dem Anweisungen für die Ausführung der Schritte des Verfahrens nach einem der Ansprüche 1 bis 11 aufgezeichnet sind.

## Claims

1. Method for helping to improve the security of an electronic operation with a smart card (1), said smart card (1) comprising a memory (11) storing reference cryptographic nonces (40), the method comprising steps of:
a) receiving (101) a last cryptographic nonce (41) intended to determine (108) a securing cryptogram (61) for said electronic operation (31),
b) determining (102) a last similarity datum (51) based on the result of at least one comparison (103) between said last cryptographic nonce (41) and one of said reference cryptographic nonces (40) stored in said memory (11),
c) storing said last similarity datum (51) in said memory (11),
d) verifying (106) if said last similarity datum (51) satisfies a predefined condition, and
e) taking (107) a countermeasure if said last similarity datum (51) satisfies said predefined condition,
wherein step d) comprises comparing (105) the last similarity datum (51) and a preceding overall similarity datum (50p) stored in said memory (11) during a preceding execution of said method in order to determine a last overall similarity datum (50), the last overall similarity datum (50) being selected between the last similarity datum (51) and the preceding overall similarity datum (50p) based on a determined overall criterion such as that which is selected is that which corresponds to the greatest degree of similarity.

2. Method according to claim 1, further comprising a storage of said last cryptographic nonce (41) in said memory (11).

3. Method according to the preceding claim, **characterised in that** at least one of the reference cryptographic nonces (40) is a cryptographic nonce received during an electronic operation prior to said electronic operation (31).

4. Method according to any one of the preceding claims, **characterised in that** at least one of the reference cryptographic nonces is fixed.

5. Method according to any one of the preceding claims, further comprising a sending of information to a verification entity (3).

6. Method according to any one of the preceding claims, **characterised in that** step b) comprises:
• comparing (103a) said last cryptographic nonce (41) with a first reference cryptographic nonce (40a) so as to obtain a first intermediate similarity datum (52a),
• comparing (103b) said last cryptographic nonce (41) with a second reference cryptographic nonce (40b) so as to obtain a second intermediate similarity datum (52b), and
• comparing (104) said first (52a) and second (52b) intermediate similarity data so as to select from among them the last similarity datum (51).

7. Method according to any one of the preceding claims, **characterised in that** the last cryptographic nonce (41) comprises first elements located at positions in the last cryptographic nonce (41), the reference cryptographic nonce (40) comprises second elements located at positions in the reference cryptographic nonce (40), each position in the last cryptographic nonce (41) having an equivalent position in the reference cryptographic nonce (40) and the comparison (103) comprises comparing each first element with the second element located in the equivalent position, an element which could be, for example, an octet, a quartet or a bit.

8. Method according to any one of the preceding claims, **characterised in that** the countermeasure of step e) comprises that the smart card forces the electronic operation to occur online; or **in that** the countermeasure of step e) is that the application currently executed and relating to the electronic operation is blocked, such that only one specific command can unblock the application; or **in that** the countermeasure of step e) is that any contactless electronic operation between a reader (2) and the smart card (1) becomes prohibited, only the contact electronic operations remain authorised; or **in that** the countermeasure of step e) is to block the smart card (1) reversibly or irreversibly; or **in that** the countermeasure of step e) is to delete the memory (11) of the smart card (1).

9. Method according to any one of claims 1 to 7, **characterised in that** said countermeasure prevents continuing said electronic operation.

10. Method according to any one of the preceding claims, **characterised in that** said electronic operation complies with the EMV protocol.

11. Method according to any one of the preceding claims, comprising, if said last similarity datum (51) does not satisfy said predefined condition, to determine a securing cryptogram (61) based on said last cryptographic nonce (41) and said key (71) and to send said securing cryptogram (61) to a verification entity (3).

12. Smart card (1) comprising first computerised execution means to implement steps a) to e) of the method according to any one of the preceding claims.

13. Computerised system (100) comprising a smart card (1) comprising first computerised execution means to implement steps a) to c) of the method according to any one of claims 1 to 11 and second computerised execution means to implement steps d) and e).

14. Computer program comprising instructions to execute steps of the method according to any one of claims 1 to 11 when said computer program is executed by computerised execution means.

15. Recording medium which can be read by computerised execution means and on which are recorded instructions to execute steps of the method according to any one of claims 1 to 11.
